**Europäisches Patentamt**

**European Patent Office**

**Office européen des brevets**

(19)

(11) Veröffentlichungsnummer: **0 271 848**
**B1**

(12)

# EUROPÄISCHE PATENTSCHRIFT

(45) Veröffentlichungstag der Patentschrift:
**17.10.90**

(21) Anmeldenummer: **87118429.7**

(22) Anmeldetag: **12.12.87**

(51) Int. Cl.⁵: **F16F 13/00**

(54) **Aktives, hydraulisch dämpfendes Motorlager.**

(30) Priorität: **16.12.86 DE 3642953**

(43) Veröffentlichungstag der Anmeldung:
**22.06.88 Patentblatt 88/25**

(45) Bekanntmachung des Hinweises auf die Patenterteilung:
**17.10.90 Patentblatt 90/42**

(84) Benannte Vertragsstaaten:
**DE ES FR GB IT SE**

(56) Entgegenhaltungen:
**EP-A- 0 137 477**
**EP-A- 0 259 054**
**DE-A- 3 433 797**
**DE-A- 3 731 024**
**FR-A- 2 599 799**
**US-A- 4 720 087**

(73) Patentinhaber: **METZELER Gesellschaft mit
beschränkter Haftung, Gneisenaustrasse 15,
D-8000 München 50(DE)**

(72) Erfinder: **Härtel, Volker, Dr., Fichtenstrasse 50,
D-8034 Germering(DE)**

(74) Vertreter: **Michelis, Theodor, Dipl.-Ing.,
Gneisenaustrasse 15, D-8000 München 50(DE)**

ACTORUM AG

## Beschreibung

Die Erfindung bezieht sich auf ein aktives, hydraulisch dämpfendes Motorlager, insbesondere für Kraftfahrzeuge, mit zwei gummielastische Umfangswände aufweisende Kammern und mit einer starren Zwischenplatte zwischen den beiden Kammern sowie zwei parallelen Überströmöffnungen in der Zwischenplatte, von denen die eine Überströmöffnung parallele, plattenförmige Elektroden zum Anlegen eines elektrischen Feldes aufweist und auf der Ober- und Unterseite von mit der Zwischenplatte flüssigkeitsdicht verbundenen, dünnwandigen Gummimembranen überspannt und allein der von den Gummimembranen umschlossene Raum mit einer elektroviskosen Flüssigkeit gefüllt ist und die übrigen, über eine die erste Überströmöffnung umschließende, kanalförmige zweite Überströmöffnung verbundenen Kammerbereiche eine niederviskose Dämpfungsflüssigkeit enthalten.

Ein derartiges Motorlager ist in der älteren, nicht vorveröffentlichten EP-A 0 259 054 beschrieben. Eine derartige Gestaltung hat gegenüber einen aus der DE-A 3 336 965 bekannten Motorlager den Vorteil, daß nur ein geringerer Volumenbereich des hydraulisch dämpfenden Lagers mit elektroviskoser Flüssigkeit gefüllt ist, und zwar der Bereich, der für die Tilgung hochfrequenter Schwingungen mit wirkungsweise wie ein klassischer mechanischer Entkoppler verantwortlich ist, um damit das akustische Übertragungsverhalten eines solchen Lagers zu verbessern. Bei der vorbeschriebenen Anordnung sind die Elektroden jedoch als konzentrische Ringelektroden oder parallel verlaufende Plattenelektroden ausgebildet, wodurch ein gewisser Bremseffekt auf die Flüssigkeit ausgeübt wird, wodurch eine unmittelbare Schwingungsübertragung nicht mehr direkt gegeben ist.

Der vorliegenden Erfindung liegt daher die Aufgabe zugrunde, ein derartiges aktives, hydraulisch dämpfendes Motorlager so zu gestalten, daß eine möglichst unmittelbare Schwingungsübertragung auf den zum Mitschwingen zu veranlassenden Volumenbereich des Flüssigkeitsraumes des Lagers ermöglicht ist.

Zur Lösung dieser Aufgabe ist erfindungsgemäß vorgesehen, daß die Elektroden als siebförmige Platten ausgebildet sind, die quer zur Strömungsrichtung in der Überströmöffnung angeordnet sind.

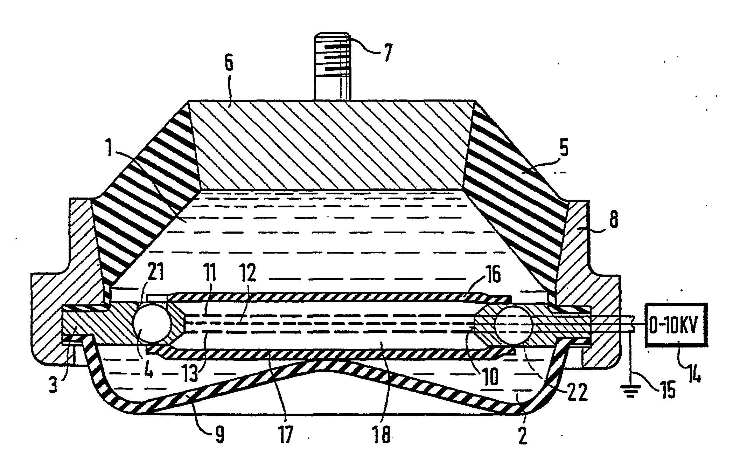

Anhand einer schematischen Zeichnung sind Aufbau und Wirkungsweise eines Ausführungsbeispiels nach der Erfindung näher erläutert. Dabei zeigt die einzige Figur einen Längsschnitt durch ein entsprechendes Motorlager mit siebförmigen Platten als Elektroden.

Wie aus der Figur zu ersehen ist, weist das Zweikammer-Motorlager eine obere Kammer 1 und eine untere Kammer 2 auf, die durch eine, in der Zwischenplatte 3 verlaufende, wendelförmige Überströmöffnung 4 miteinander verbunden sind. Die obere Kammer 1 wird von einer starkwandigen hohlkegelförmigen Kammerwandung 5 aus einem gummielastischen Material gebildet, die an der oberen Stirnseite mit einer Lagerplatte 6, an der über einen Bolzen 7 beispielsweise der Motor festgelegt werden kann und im unteren Bereich mit dem Halteflansch 8 zum Anschluß an ein nicht näher dargestelltes Widerlager haftend verbunden ist. Die untere Kammer 2 wird von einer beispielsweise tassenförmigen Kammerwandung 9 aus ebenfalls gummielastischem, jedoch weicherem Material gebildet, die auch mit dem Flansch 8 verbunden ist.

Die Zwischenplatte 3 weist eine weitere, zentrale Überströmöffnung 10 auf, deren Durchmesser bis zu 90% des Zwischenplattendurchmessers betragen kann. In diese Überströmöffnung 10 sind parallel zueinander übereinanderliegend drei Siebplatten 11, 12 und 13 eingesetzt, die aus einem Drahtgewebe mit einer Maschenweite von etwa 1 mm bestehen und untereinander vorzugsweise 1 bis 3 mm beabstandet sind. Von den drei dargestellten Siebplatten 11, 12 und 13 ist bei dem vorliegenden Ausführungsbeispiel die mittlere Siebplatte 12 als Elektrode an eine Spannungsquelle 14 gelegt, während die beiden anderen Siebplatten 11 und 13 auf Erdpotential 15 liegen.

Der Bereich der Überströmöffnung 10 ist nunmehr auf seiner Ober- und Unterseite mit je einer dünnwandigen Gummimembran 16 und 17 überspannt, die an ihrem Umfang mit der Zwischenplatte 3 flüssigkeitsdicht verbunden sind. Die kreisplattenförmig ausgebildeten Gummimembranen 16 und 17 weisen dabei einen Durchmesser mindestens entsprechend dem Durchmesser der Überströmöffnung 10 auf, um diese voll zu überdecken.

Damit ist also von den Kammern 1 und 2 des Motorlagers durch die Membranen 16 und 17 ein Raum 18 im unmittelbaren Bereich der Steuerelektroden 11, 12 und 13 abgetrennt, der mit einer elektroviskosen Flüssigkeit gefüllt ist. Die Grundviskosität dieser Flüssigkeit liegt etwa zwischen 100 bis 1.000 mPa x s und kann beispielsweise aus einer Mischung von etwa 20 bis 60 Gew.-% Kieselsäure als Feststoff, 30 bis 50 Gew.-% einer geeigneten organischen Phase mit niedriger Dielektrizitätskonstante, 5 bis 10 Gew.-% Wasser sowie etwa 5 Gew.-% eines Dispergiermittels bestehen.

Der übrige Raum der Kammern 1 und 2 ist demgegenüber mit einer Flüssigkeit sehr viel geringerer Viskosität gefüllt, wie das bei herkömmlichen Motorlagern der Fall ist. Zu der Funktionsweise eines solchen Lagers ist folgendes festzuhalten. Die wendelförmige Überströmöffnung 4 steht mit einer Öffnung 21 mit der oberen Kammer 1 und einer Öffnung 22 mit der unteren Kammer 2 in Verbindung, wobei die beiden Öffnungen 21 und 22 um etwa 240° zueinander versetzt sind. Diese Überströmöffnung 4 bestimmt durch die in ihr schwingende Flüssigkeitssäule bei Schwingungsanregung durch einen auf die Lagerplatte 6 und die eigentliche Tragfeder 5 einwirkenden Motor Höhe und Frequenzlage der maximalen Dämpfung, wie bei herkömmlichen, hydraulisch gedämpften Motorlagern. Zweckmäßig ist es dabei, wenn diese Überströmöffnung 4 in ihren Abmessungen so auf die Volumensteifigkeit des Lagers und das spezifische Gewicht und die Viskosität der Flüssigkeit abgestimmt ist, daß sich für die in der Überströmöffnung 4 schwingende Flüssigkeitssäule Eigenfrequenzen zwischen 2 und 50 Hz ergeben.

Das von den Membranen 16 und 17 eingeschlossene Flüssigkeitsvolumen wird insbesondere bei hochfrequenten Schwingungen über die Membranen angeregt und wirkt damit als herkömmlicher Entkoppler, um somit das akustische Verhalten zu verbessern. Wenn jetzt an die Elektroden 11, 12 und 13 eine Spannung angelegt wird, so wird sich die innerhalb des Bereiches 18 befindliche elektroviskose Flüssigkeit in ihrer Viskosität bis zur annähernden Verfestigung erhöhen, so daß damit die spezifischen Parameter des Entkopplers bestimmt und eingestellt werden können. Durch die auf elektrischem Wege eingestellte hohe Viskosität der elektroviskosen Flüssigkeit innerhalb des Membransystems entfallen die bei weichen Membranen häufig auftretenden Klappergeräusche bei deren Auftreffen auf die Anschlagplatten.

Die wesentlichen Vorteile der beschriebenen Ausbildung der Motorlager besteht im folgenden. Gegenüber einem aktiven Motorlager, dessen beide Kammern vollständig mit relativ hochviskoser elektroviskoser Flüssigkeit gefüllt sind, lassen sich jetzt durch die Verwendung einer die beiden Hauptkammern 1 und 2 füllenden Arbeitsflüssigkeit erheblich geringerer Viskosität als der der elektroviskosen Flüssigkeit die Grundeigenschaften eines hydraulisch gedämpften Lagers, nämlich vor allem der Trägheitseffekt durch die in der wendelförmigen Überströmöffnung 4 schwingenden Flüssigkeitssäule optimal erhalten. Dies ist bei Verwendung der höherviskosen elektroviskosen Flüssigkeit als Hauptdämpfungsflüssigkeit nur unter konstruktiven Änderungen, nämlich größerer Durchmesser und größerer Länge dieser Überströmöffnung möglich.

Ein weiterer Vorteil besteht darin, daß nur noch eine relativ geringe Menge der teuren elektroviskosen Flüssigkeit verwendet werden muß.

Ein weiterer Vorteil ergibt sich aus der Möglichkeit, die Fließwege der Flüssigkeit im Raum 18 im Bereich der jeweiligen Elektroden 11 bis 13 durch die beiden Membranen 16 und 17 zu begrenzen, d.h. die Schwingungen bei großen Amplituden werden durch den Freiweg dieser Membranen begrenzt. Das System wirkt daher wie ein klassischer mechanischer Entkoppler, jedoch ohne störende Geräuschausbildung beim Anschlag an die mechanischen Begrenzungen.

Schließlich ergibt sich ein weiterer Vorteil dadurch, daß die elektroviskose Flüssigkeit, selbst wenn sich aus ihr Partikel absetzen sollten, praktisch immer im Bereich der Elektroden gehalten wird. Demgegenüber können bei Absetzerscheinungen in einem Bauteil größerer Höhe – wie das beispielsweise bei der vollständigen Füllung eines hydraulisch gedämpften Lagers mit elektroviskoser Flüssigkeit der Fall ist – sich die aktiven Partikel auf den Boden des Lagers zusammenballen, so daß die darüber stehende geringer konzentrierte Flüssigkeit im Elektrodenbereich wegen des Fehlens dieser Partikel einen geringeren elektroviskosen Effekt zeigt.

Insgesamt lassen sich also die Vorteile herkömmlicher hydraulisch gedämpfter Motorlager mit einem langen Überströmkanal und die eines aktiven Motorlagers mit elektroviskoser Flüssigkeit optimal mit synergistischer Wirkung kombinieren.

## Patentansprüche

Aktives, hydraulisch dämpfendes Motorlager, insbesondere für Kraftfahrzeuge, mit zwei gummielastische Umfangswände (5, 9) aufweisende Kammern (1, 2) und mit einer starren Zwischenplatte (3) zwischen den beiden Kammern (1, 2), sowie zwei parallelen Überströmöffnungen (4, 10) in der Zwischenplatte (3), von denen die eine Überströmöffnung (10) parallele plattenförmige Elektroden (11, 12, 13) zum Anlegen eines elektrischen Feldes aufweist und auf der Ober- und Unterseite von mit der Zwischenplatte (3) flüssigkeitsdicht verbundenen, dünnwandigen Gummimembranen (16, 17) überspannt und allein der von den Gummimembranen (16, 17) umschlossene Raum (18) mit einer elektroviskosen Flüssigkeit gefüllt ist und die übrigen, über eine, die erste Überströmöffnung (10) umschließende kanalförmige zweite Überströmöffnung (4) verbundenen Kammerbereiche (1, 2) eine niedrigviskose Dämpfungsflüssigkeit enthalten, dadurch gekennzeichnet, daß die Elektroden als siebförmige Platten (11, 12, 13) ausgebildet sind, die quer zur Strömungsrichtung in der Überströmöffnung (10) angeordnet sind.

## Claims

Active, hydraulically damping engine bearing, in particular for motor vehicles, having two chambers (1, 2) with rubber elastic peripheral walls (5, 9) and having a rigid intermediate plate (3), between the two chambers (1, 2) and two parallel overflow openings (4, 10), in the intermediate plate (3), of which one overflow opening (10) has parallel plate-like electrodes (11, 12, 13) for applying an electrical field and is spanned on its upper and lower side by thin-walled rubber diaphragms (16, 17) which are connected in a fluid-tight manner to the intermediate plate (3), with only the space (18) enclosed by the rubber diaphragms (16, 17) being filled with an electroviscous fluid and the other chamber areas (1, 2), which are connected by a second channel-like overflow opening (4) enclosing the first overflow opening (10), containing a lowviscosity damping fluid, characterised in that the electrodes take the form of sieve-like plates (11, 12, 13) which are disposed in the overflow opening (10) at right angles to the flow direction.

## Revendications

Support actif à amortissement hydraulique pour moteur, notamment de véhicules automobiles, comprenant deux chambres (1, 2) comportant des parois périphériques (5, 9) ayant l'élasticité du caoutchouc et une plaque intermédiaire (3) rigide entre les deux chambres (1, 2), ainsi que deux ouvertures de passage (4, 10) parallèles ménagées dans la plaque intermédiaire (3), l'une de ces ouvertures (10) comportant des électrodes (11, 12, 13) parallèles en forme de plaque, pour l'application d'un champ électrique, et étant recouverte, du côté supérieur et du côté inférieur, par des membranes en caoutchouc (16, 17) à paroi mince reliées à la plaque intermédiaire (3) de manière étanche au liquide, seul l'espace (18) entouré par les membranes en caoutchouc (16, 17) étant empli d'un liquide électrovisqueux, tandis que les autres parties de la chambre, communiquant par une seconde ouverture de passage (4) en forme de canal et entourant la première ouverture de passage (10), contiennent un liquide d'amortissement de faible viscosité, caractérisé en ce que les électrodes sont constituées en plaques en forme de tamis (11, 12, 13) qui sont disposées transversalement au sens d'écoulement dans l'ouverture de passage (10).